# DEMANDE DE BREVET EUROPEEN

(11) **EP 3 109 967 A1**
(43) Date de publication de la demande: **28.12.2016**
(21) Numéro de dépôt: 16174529.4
(22) Date de dépôt: 15.06.2016
(51) Int. Cl.: H02J 3/38

(54) **PROCEDE DE GESTION DE LA PRODUCTION D'ENERGIE D'UN SYSTEME ENERGETIQUE ET DISPOSITIF GESTIONNAIRE ASSOCIE**

(30) Priorité: 23.06.2015 FR 1555762
(71) Demandeur: COMMISSARIAT A L'ENERGIE ATOMIQUE ET AUX ENERGIES ALTERNATIVES, 75015 Paris (FR)
(72) Inventeur: AL SHAKARCHI, Franck, 73160 SAINT SULPICE (FR); GUILLOU, Hervé, 75015 PARIS (FR)
(74) Mandataire: Novaimo

(57) **Abrégé**

Le système énergétique intègre un dispositif de production d'énergie (2) et une pluralité de modules de stockage d'énergie (3A-3D). Le procédé comprend les étapes suivantes mises en oeuvre par le dispositif gestionnaire (4) : élaboration d'un plan prédictif de production d'énergie en sortie du système pour une période future, et intégration (E5) d'au moins une opération connexe sur un module de stockage dans le plan de production du système. L'intégration d'une opération connexe sur un module de stockage dans le plan de production comprend l'élaboration d'un plan prédictif de fonctionnement du module de stockage contenant une mise à un état de charge initial requis pour l'opération connexe, une phase d'exécution d'un profil de puissance de l'opération connexe et un arrêt de ladite phase d'exécution lorsqu'un critère d'arrêt de l'opération connexe est satisfait.

## Description

L'invention concerne la gestion de la production d'un système énergétique comprenant un dispositif de production d'énergie, ou source d'énergie, une pluralité de modules de stockage d'énergie et un dispositif de contrôle destiné à contrôler le stockage d'énergie et la production d'énergie en sortie du système.

Certains systèmes, ou centrales, de production d'énergie produisent de l'énergie, par exemple de l'énergie électrique, par transformation d'une énergie renouvelable telle que l'énergie solaire ou l'énergie éolienne. L'énergie électrique produite est délivrée à un réseau électrique de distribution. L'énergie renouvelable est le plus souvent intermittente : elle n'est pas continue et régulière au cours du temps. Or, il peut s'avérer nécessaire ou utile de contrôler la production d'énergie électrique en sortie du système, ou de la centrale, dans le but par exemple d'assurer la stabilité du réseau électrique ou de délivrer l'énergie électrique produite durant une période tarifaire favorable pour l'exploitant du système ou de la centrale. Afin d'assurer une certaine flexibilité entre la production d'énergie par le dispositif de production amont d'énergie (modules photovoltaïques, éoliennes, ou autres) et la production d'énergie en sortie du système, celui-ci intègre des modules de stockage d'énergie. En fonctionnement, le dispositif de production d'énergie produit de l'énergie électrique en fonction de la quantité d'énergie renouvelable reçue. Cette énergie électrique est soit directement fournie au réseau électrique, soit stockée provisoirement par les modules de stockage puis fournie ultérieurement au réseau électrique.

Afin de gérer au mieux le stockage de l'énergie et sa production en sortie du système, le fonctionnement de celui-ci est en général planifié à l'avance par un plan de production d'énergie. Ce plan de production est établi sur la base d'une hypothèse de production d'énergie par la source. Il couvre une période temporelle de référence, par exemple de 24h, et est destiné à être appliqué durant une période correspondante future. Le plan de production est défini par :
- un plan de puissance représentant l'évolution de la puissance énergétique délivrée en sortie du système pendant la période de référence et
- un plan d'état de charge représentant l'évolution de l'état de charge (ou « State-of-Energy » ou « SoE » en anglais) global des modules de stockage.

En fonctionnement, le stockage d'énergie et la production d'énergie en sortie du système sont pilotés sur la base de ce plan de production.

Au cours de la vie du système de production d'énergie, il peut s'avérer nécessaire de réaliser certaines opérations connexes au fonctionnement normal du système, notamment sur les modules de stockage. De telles opérations connexes peuvent comprendre des tests, des calibrages, des opérations de maintenance, des opérations d'équilibrage, ou autres.

Actuellement, ces opérations connexes sont réalisées soit « hors ligne » sur au moins une partie de la centrale de production, qui est déconnectée et ne participe donc pas momentanément à la production globale d'énergie, soit « en ligne » (c'est-à-dire durant la production d'énergie) de façon opportuniste si une situation favorable se présente et permet de réaliser une opération connexe.

La présente invention vient améliorer la situation.

A cet effet, l'invention concerne un procédé de gestion par un dispositif gestionnaire de la production d'énergie d'un système énergétique intégrant un dispositif de production d'énergie et une pluralité de modules de stockage d'énergie, comprenant une étape d'élaboration, par le dispositif gestionnaire, d'un plan prédictif de production d'énergie en sortie du système pour une période future, caractérisé en ce qu'il comprend une étape d'intégration, par le dispositif gestionnaire, d'au moins une opération connexe sur un module de stockage dans le plan de production du système.

Grâce à l'invention, en cours de production énergétique du système de production sur la base du plan de production établi, une ou plusieurs opérations connexes sont exécutées sur un ou plusieurs modules de stockage, ceux-ci participant également à la production globale du système.

Avantageusement, l'intégration d'une opération connexe sur un module de stockage dans le plan de production comprend l'élaboration d'un plan prédictif de fonctionnement du module de stockage contenant une mise à un état de charge initial requis pour l'opération connexe, une phase d'exécution d'un profil de puissance de l'opération connexe et un arrêt de ladite phase d'exécution lorsqu'un critère d'arrêt de l'opération connexe est satisfait.

Avantageusement encore, le procédé comprend une étape d'enregistrement d'au moins un profil d'opération connexe dans une base de données du dispositif gestionnaire, ledit profil contenant un état de charge initial requis du module de stockage, un profil de puissance comprenant des données d'évolution temporelle de puissance du module de stockage, un critère d'arrêt de l'opération connexe.

Selon un premier mode de réalisation, l'étape d'élaboration d'un plan de production et l'étape d'intégration d'au moins une opération connexe sur un module de stockage dans le plan de production du système sont réalisées de façon combinée.

Selon un deuxième mode de réalisation, l'étape d'intégration d'au moins une opération connexe sur un module de stockage dans le plan de production du système est réalisée après l'étape d'élaboration d'un plan de production.

Avantageusement, l'étape d'élaboration d'un plan de production et l'étape d'intégration d'au moins une opération connexe sur un module de stockage dans le plan de production sont réalisées par le dispositif gestionnaire par exécution d'un logiciel d'optimisation.

Dans ce cas, avantageusement encore, le procédé comprend une étape de spécification de fonctions à optimiser, l'une au moins des fonctions étant d'intégrer au moins une opération connexe dans le fonctionnement d'au moins un module de stockage.

Dans un mode de réalisation particulier, l'intégration d'une opération connexe sur un module de stockage est réalisée en effectuant une compensation de charge ou de décharge avec au moins un autre module de stockage.

Dans un autre mode de réalisation particulier, l'intégration d'une opération connexe sur un module de stockage est réalisée par modification d'un plan de production préétabli dans une marge de tolérance donnée.

L'opération connexe peut être une opération du groupe comportant :
- un premier test de capacité de charge, consistant à réaliser une charge complète à puissance de charge constante du module de stockage suivie d'une décharge complète à puissance de décharge constante du module de stockage,
- un deuxième test de capacité de charge, consistant à réaliser une charge complète à plusieurs puissances de charge du module de stockage suivie d'une décharge complète à plusieurs puissances de décharge du module de stockage,
- un équilibrage du module de stockage caractérisé par une charge à une puissance de charge fixe inférieure ou égale à une puissance maximale et pendant une durée supérieure ou égale à une durée minimale,
- une opération de maintenance caractérisée par une inactivité du module de stockage pendant une durée déterminée.

Dans un mode de réalisation particulier, le dispositif de production d'énergie est de type intermittent et le plan de production est établi sur la base d'une estimation de production d'énergie par le dispositif de production d'énergie pendant la période future.

L'invention concerne aussi un dispositif gestionnaire d'un système de production d'énergie intégrant un dispositif de production d'énergie et une pluralité de modules de stockage d'énergie, comprenant un outil d'élaboration d'un plan prédictif de production d'énergie en sortie du système pour une période future, caractérisé en ce que l'outil d'élaboration du plan de production comprend un module d'intégration d'au moins une opération connexe sur un module de stockage dans le plan de production du système.

Avantageusement, le module d'intégration est adapté pour élaborer un plan prédictif de fonctionnement du module de stockage contenant une mise à un état de charge initial requis pour l'opération connexe, une phase d'exécution d'un profil de puissance de l'opération connexe et un arrêt de ladite phase d'exécution lorsqu'un critère d'arrêt de l'opération connexe est satisfait.

Avantageusement encore, il comprend une base de données de stockage d'au moins un profil d'opération connexe, ledit profil contenant un état de charge initial requis du module de stockage, un profil de puissance comprenant des données d'évolution temporelle de puissance du module de stockage, un critère d'arrêt de l'opération connexe.

L'invention sera mieux comprise à l'aide de la description suivante d'un mode de réalisation particulier du procédé de gestion de la production d'énergie d'un système énergétique et d'un dispositif gestionnaire pour la mise en oeuvre du procédé, en référence aux dessins annexés sur lesquels :
- la figure 1 représente un système de production d'énergie selon un mode de réalisation particulier de l'invention ;
- la figure 2 représente une estimation de la production d'énergie par un dispositif amont de production d'énergie du système de la figure 1 et l'évolution du prix de l'énergie pendant une période de référence ;
- la figure 3 représente un plan prédictif de production d'énergie du système de la figure 1 ;
- la figure 4 représente un plan de puissance d'un ensemble de modules de stockage décomposé du système de la figure 1 en contributions individuelles des différents modules de stockage ;
- les figures 5A à 5D représentent des plans prédictifs de fonctionnement des modules de stockage d'énergie ;
- Les figures 6 à 9 représentent différents exemples de profils d'opérations connexes ;

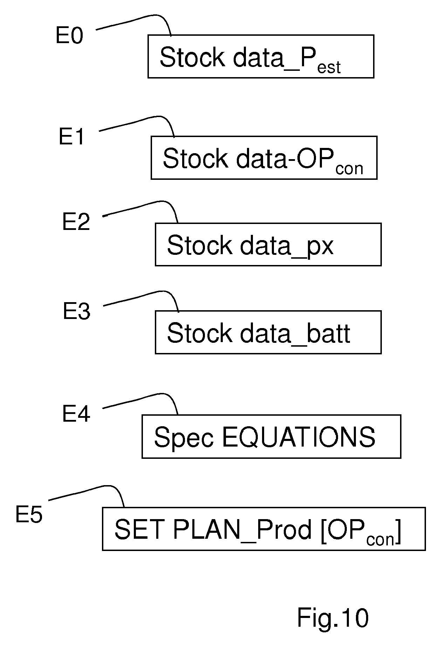

- La figure 10 représente un organigramme des étapes du procédé de gestion de l'invention, selon un mode de réalisation particulier ;
- La figure 11 représente un schéma bloc fonctionnel d'un dispositif gestionnaire du système de production d'énergie.

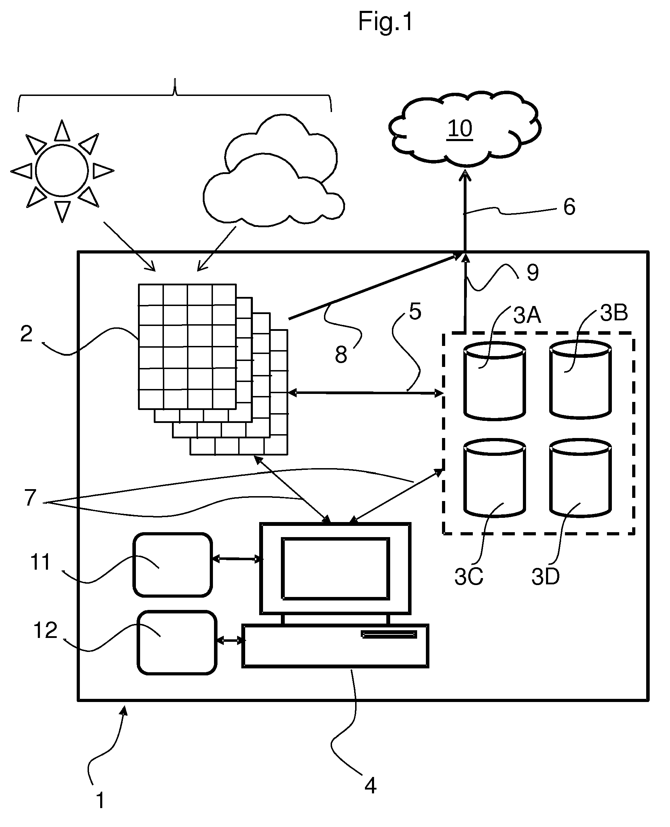

La figure 1 représente un système de production d'énergie 1 comprenant un dispositif de production amont d'énergie 2, une pluralité de modules de stockage d'énergie 3A-3D et un dispositif gestionnaire 4 de gestion de la production d'énergie du système 1.

Le dispositif de production amont d'énergie 2 comprend N source(s) d'énergie, avec *N* ≥ 1. En l'espèce, le dispositif 2 comprend N sources d'énergie aptes à transformer une première énergie telle qu'une énergie renouvelable (énergie solaire, énergie éolienne, ou autre) en une deuxième énergie, par exemple en énergie électrique. L'énergie produite par les sources d'énergie est ici temporellement intermittente, ce qui signifie qu'elle n'est pas constante et régulière au cours du temps. Dans l'exemple de réalisation décrit ici, le dispositif de production d'énergie 2 comprend N modules photovoltaïques, connectés entre eux, destinés à convertir de l'énergie solaire en énergie électrique. Le dispositif de production d'énergie 2 est dit « amont » du fait qu'il produit de l'énergie en amont de la production d'énergie en sortie 6 du système 1.

Le système 1 comprend M dispositifs de stockage d'énergie 3A-3D, ici des batteries, avec M supérieur à 1. Dans l'exemple illustratif décrit ici, M est égal à 4. Ces M dispositifs de stockage 3A-3D sont reliés par une liaison électrique 5 au dispositif 2 de production d'énergie.

Le système 1 comprend une sortie 6 reliée à un réseau électrique 10, par laquelle le système 1 est destiné à injecter de l'énergie électrique sur le réseau 10. Le dispositif amont de production d'énergie 2 et les modules de stockage d'énergie 3A-3D sont connectés à la sortie 6 respectivement par deux liaisons électriques respectives 8 et 9.

L'énergie produite en amont par le dispositif 2 est soit directement fournie au réseau électrique 10 par la sortie 6 du système 1, soit provisoirement stockée dans les modules de stockage 3A-3D du système 1, comme cela sera explicité plus loin.

Le dispositif gestionnaire 4 est destiné à gérer le stockage de l'énergie électrique produite par le dispositif de production amont 2 et la production d'énergie électrique en sortie 6 du système 1. Le stockage d'énergie et la production d'énergie en sortie 6 du système 1 (autrement dit l'injection d'énergie électrique sur le réseau électrique 10) sont pilotés par le dispositif gestionnaire 4 sur la base d'un plan prédictif de production.

Le plan prédictif de production est élaboré par un outil 40 du dispositif gestionnaire 4. Il couvre une période temporelle de référence, par exemple 24 heures.

Le plan prédictif de production correspond à un fonctionnement souhaité ou cible du système de production d'énergie 1 durant une période future correspondant à la période de référence qui couvre ici 24 heures. Il comprend :
- un plan de puissance de production contenant des données d'évolution temporelle d'une puissance énergétique souhaitée, ou de consigne, P_{cons} en sortie 6 du système 1 pendant la période de référence ;
- un plan correspondant d'état de charge global (ou d'état d'énergie ou SoE de l'anglais « State of Energy »)) contenant des données d'évolution temporelle d'un état de charge (ou état d'énergie) global souhaité, ou de consigne, de l'ensemble des modules de stockage 3A-3D durant la période de référence.

Une certaine marge de tolérance peut être définie par rapport aux puissances de production de consigne et aux états de charge de consigne des modules de stockage. Par exemple, la marge de tolérance peut être de + ou - 5% autour de la puissance de consigne pour le plan de puissance et de + ou - 5% autour de l'état de charge de consigne.

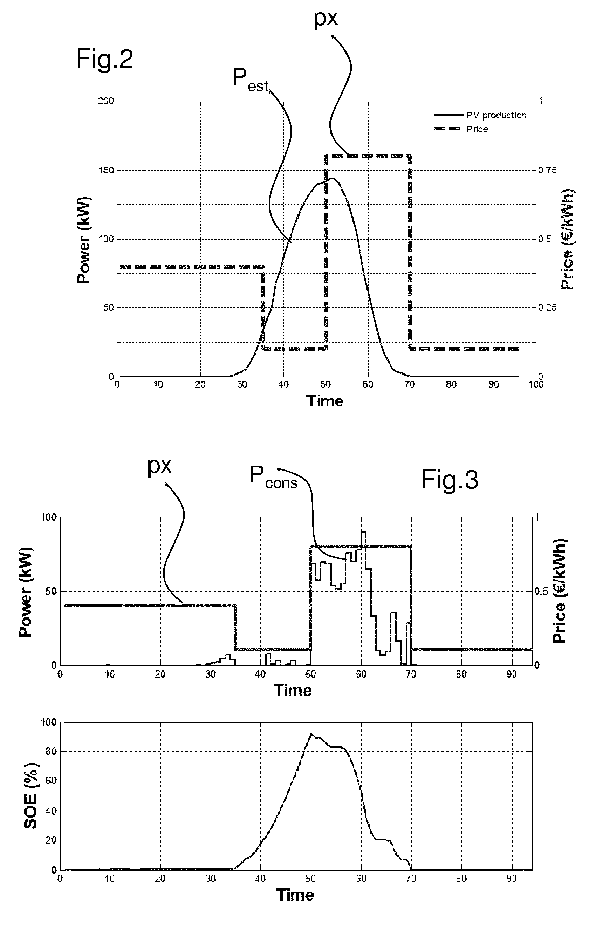

Sur la figure 3, on a représenté un exemple de plan de production du système de production 1.

Le plan de production est établi sur la base de données d'estimation d'une production d'énergie électrique par le dispositif de production d'énergie 2 durant une période temporelle future correspondant à cette période de référence. Sur la figure 2, on a représenté l'évolution temporelle de la puissance énergétique estimée Pₑₛₜ pour une période de référence de 24 heures. La période débute à un instant référencé « 0 » correspondant à l'heure « 0h » (ou minuit) et se termine à l'instant référencé « 100 » à l'heure 24h (ou minuit) l'instant référencé « 50 » correspondant à l'heure 12h (ou midi), les heures étant données en heure solaire.

La courbe « px » représentée en pointillés sur la figure 2 correspond à l'évolution temporelle du prix de l'électricité sur la période de référence 0-100.

Le procédé de gestion de la production d'énergie de l'invention comprend une première étape E0 d'enregistrement de données data_Pₑₛₜ relatives l'estimation de la production d'énergie électrique par le dispositif de production d'énergie 2 durant la période de référence, dans une base de données 11 du dispositif gestionnaire 4. Les données data_Pₑₛₜ peuvent être saisies par un utilisateur au moyen d'une interface utilisateur du dispositif gestionnaire 4 qui les mémorise dans la base de données 11.

Selon l'invention, le procédé de gestion de la production du système 1 comprend une étape d'intégration d'opérations connexes sur des modules de stockage 3A-3D dans le plan de production, comme cela sera explicité plus loin. Une « opération connexe sur un module de stockage » est une opération lors de laquelle le module de stockage est sollicité pour réaliser une ou plusieurs actions visant un but autre que de contribuer à la production d'énergie par le système 1. Cet autre but peut être supplémentaire ou alternatif à la contribution pour produire de l'énergie en sortie du système 1. Une opération connexe sur un module de stockage peut être un test de charge (complète ou partielle) et/ou de décharge (complète ou partielle), un équilibrage, une mise en maintenance ou toute autre opération sollicitant le module de stockage.

Une opération connexe est caractérisée par différents éléments comportant :
- un état de charge initial ;
- un profil de puissance constitué par données d'évolution temporelle de la puissance (de charge et/ou de décharge) du module de stockage, ces données pouvant être représentée par une courbe de puissance ;
- un critère d'arrêt de l'opération ;
- éventuellement la possibilité d'inclure des pauses au sein du profil de puissance afin de faciliter son intégration dans le plan de production du système ;
- éventuellement une valeur économique.

Le procédé de gestion de la production d'énergie de l'invention comprend une deuxième étape E1 d'enregistrement d'un ensemble de profils d'opérations connexes dans une base de données 12 du dispositif gestionnaire 4. Chaque profil d'opération connexe contient les données caractéristiques relatives à cette opération « data-OP_{con} », mentionnées ci-dessus. Les données data-OP_{con} peuvent être saisies par un utilisateur au moyen de l'interface utilisateur du dispositif gestionnaire 4 qui les mémorise dans la base de données 12.

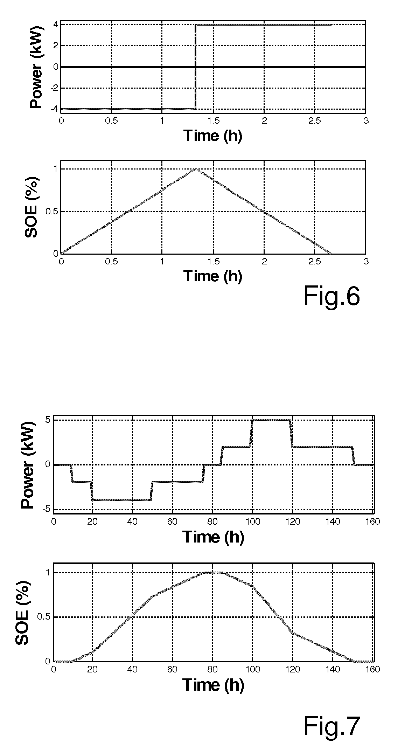

Les figures 6 à 9 représentent, à titre d'exemples illustratifs, le profil de puissance (courbes « Power ») et le profil correspondant d'état de charge (courbes « SoE ») relatifs à différentes opérations connexes.

La figure 6 représente les profils de puissance et d'état de charge ou d'énergie relatifs à un premier test de charge et de décharge complètes d'un module de stockage. L'opération comprend :
- une première phase de charge du module de stockage consistant à faire passer son état de charge ou d'énergie (SoE) de 0% à 100% avec une puissance de charge constante (par exemple 4kW), puis
- une deuxième phase de décharge du module de stockage consistant à faire passer son état de charge ou d'énergie (SoE) de 100% à 0% avec une puissance de décharge constante (par exemple 4kW).

La figure 7 représente les profils de puissance et d'état de charge relatifs à un deuxième test de charge et de décharge complètes d'un module de stockage. L'opération comprend les phases successives suivantes :
- une première phase de relaxation du module de stockage, en début de test ;
- une deuxième phase de charge du module de stockage consistant à faire passer son état de charge ou d'énergie (SoE) de 0% à 100% avec un profil de puissance de charge variable (aléatoire), puis
- une troisième phase de relaxation du module de stockage d'une durée minimale imposée ;
- une quatrième phase de décharge du module de stockage consistant à faire passer son état de charge ou d'énergie (SoE) de 100% à 0% selon un profil de puissance de décharge variable (aléatoire) ;
- une cinquième phase de relaxation du module de stockage, en fin de test.

Une phase de relaxation est une phase durant laquelle le module de stockage est inactif, sa puissance de charge ou de décharge étant nulle.

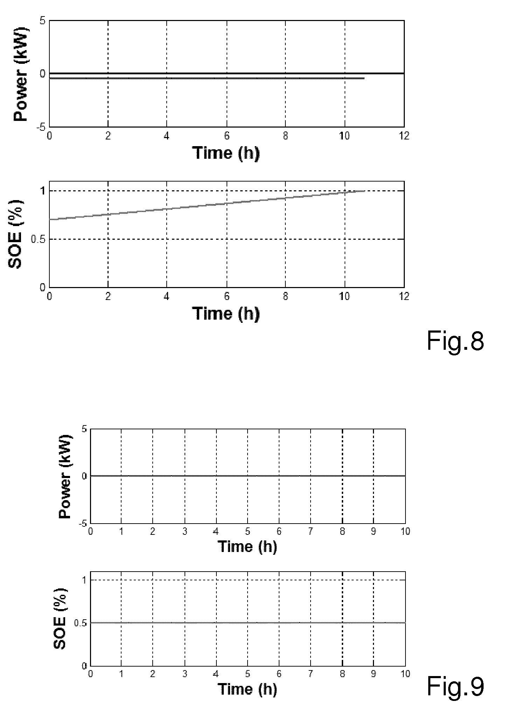

La figure 8 représente les profils de puissance et d'état de charge relatifs à une opération connexe d'équilibrage d'un module de stockage. L'équilibrage comprend une phase unique de charge avec une puissance de charge très faible, par exemple inférieure à 1kW, avantageusement inférieure ou égale à 0,5kW. Au début de l'opération, l'état de charge du module de stockage est strictement inférieur à 100%, par exemple compris entre 50% et 80%. L'opération se termine lorsque l'état de charge ou d'énergie du module a atteint 100%.

La figure 9 représente les profils de puissance et d'état de charge relatifs à une mise en maintenance d'un module de stockage. L'opération comprend une phase unique d'inactivité du module de stockage pendant une durée supérieure ou égale à une durée limite par exemple égale à 2 heures. Pendant cette durée, le module de stockage peut être éventuellement déconnecté du système 1 pour une opération de maintenance.

Le procédé comprend ici également une étape E2 d'enregistrement de données d'évolution du tarif de l'électricité durant la période de référence. Ces données tarifaires « data-px » sont représentées par la courbe px sur les figures 2 et 3. Elles sont enregistrées dans la base de données 11 du dispositif gestionnaire 4, après avoir été saisies par un utilisateur.

Le procédé comprend aussi une étape E3 d'enregistrement de données relatives aux modules de stockage « data_batt ». Les modules de stockage, ou batteries, 3A-3D sont modélisés par un ensemble de données caractéristiques comportant ici une puissance maximale (de charge ou de décharge), une capacité de stockage et un état de charge initial. Les données relatives aux modules de stockage sont mémorisées dans la base de données 11 par le dispositif gestionnaire 4, par exemple après avoir été saisies par un utilisateur ou obtenues par un test réalisé sur le module.

Les données relatives à l'estimation de la production d'énergie Pₑₛₜ, les données relatives aux modules de stockage 3A-3D et les données relatives au tarif de l'électricité constituent des contraintes qui peuvent être prises en compte lors de l'élaboration d'un plan de production du système 1 par optimisation.

Le procédé comprend ensuite une étape E4 de spécification d'une ou plusieurs fonctions à optimiser à l'outil 40 d'élaboration d'un plan de production. Par fonctions à optimiser, on entend désigner un objectif à réaliser par le système 1 lors de la production d'énergie selon le plan de production. Par exemple, on peut spécifier les fonctions suivantes :
a) maximiser le gain à la vente de l'énergie électrique produite en sortie ;
b) réaliser au moins une opération connexe sur au moins un module de stockage.

Dans ce cas, on souhaite que le système 1 produise de l'énergie en sortie 6 de manière à maximiser le gain à la vente et réalise une ou plusieurs opérations connexes sur un ou plusieurs modules de stockage, par exécution du plan de production durant une période future correspondant à la période de référence.

A la place de la fonction b), on pourrait spécifier toute autre fonction visant à intégrer au moins une opération connexe dans le fonctionnement d'un ou plusieurs modules de stockage. Par exemple, la fonction peut être d'imposer de réaliser au moins une opération connexe sur chaque module de stockage.

On peut aussi ajouter la fonction de maximiser la valeur économique globale des opérations connexes intégrées. Comme précédemment explicité, chaque opération connexe est associée à une valeur économique représentative de l'intérêt de mettre en oeuvre cette opération connexe sur le plan économique. Si plusieurs opérations connexes sont intégrées dans le plan de production, les valeurs économiques respectives de ces opérations sont cumulées afin d'obtenir une valeur économique globale. Dans ce cas, la fonction est de maximiser la valeur économique globale des opérations connexes intégrées.

Dans un autre exemple de réalisation, la fonction objectif est de réaliser une opération connexe spécifique imposée sur un ou plusieurs modules de stockage particuliers, par exemple suite à un incident ou à un défaut de production.

En toute hypothèse, lors de l'étape E4, l'outil 40 du module gestionnaire 4 enregistre une ou plusieurs fonctions objectifs à optimiser, l'une au moins de ces équations étant d'intégrer au moins une opération connexe dans le fonctionnement d'un ou plusieurs modules de stockage. Les fonctions peuvent être spécifiées par un utilisateur au moyen de l'interface utilisateur du dispositif gestionnaire 4.

Lors d'une étape E5, l'outil 40 du dispositif gestionnaire 4 élabore un plan de production du système 1. Ce plan de production est élaboré par un processus d'optimisation qui consiste à déterminer une solution optimale au(x) fonction(s) spécifiée(s) lors de l'étape E4 en tenant compte de certaines contraintes. Les contraintes comprennent ici l'estimation de la puissance Pₑₛₜ produite par les modules photovoltaïques, le tarif évolutif de l'électricité et les caractéristiques des modules de stockage.

L'élaboration E5 du plan de production du système 1 par le dispositif gestionnaire, comme cela vient d'être décrit, réalise, de façon combinée, une intégration d'au moins une opération connexe sur un module de stockage dans le plan de production du système. Ainsi l'élaboration du plan de production et l'intégration d'une ou plusieurs opérations connexes sur un ou plusieurs modules de stockage sont réalisées en même temps. Le plan de production est élaboré en y intégrant une ou plusieurs opérations connexes sur un ou plusieurs modules de stockage. Afin d'intégrer une opération connexe sur un module de stockage dans le plan de production, le dispositif gestionnaire 4 élabore un plan de fonctionnement du module de stockage en y incluant une mise à l'état de charge initial requis pour l'opération connexe, une phase d'exécution du profil de puissance de l'opération connexe et un arrêt de cette phase d'exécution lorsque le critère d'arrêt de l'opération connexe est satisfait.

Un exemple illustratif de plan de production déterminé est représenté sur la figure 3. Ce plan de production est ici adapté de sorte à ce que le système de production 1 injecte de l'énergie sur le réseau électrique 10 quasi-intégralement durant la période tarifaire la plus profitable pour l'exploitant du système 1 (c'est-à-dire la période pendant laquelle le prix de l'électricité à la vente est le plus élevé), entre les instants 50 et 70, afin d'optimiser le gain de vente de l'électricité. Selon le plan de production, avant l'instant 50, la quasi-totalité de l'énergie électrique produite en amont par le dispositif de production 2 est stockée dans les modules de stockage 3A-3D de sorte que l'état de charge global augmente. Entre les instants 50 et 70, l'état de charge diminue du fait qu'une partie de l'énergie injectée sur le réseau électrique provient des modules de stockage.

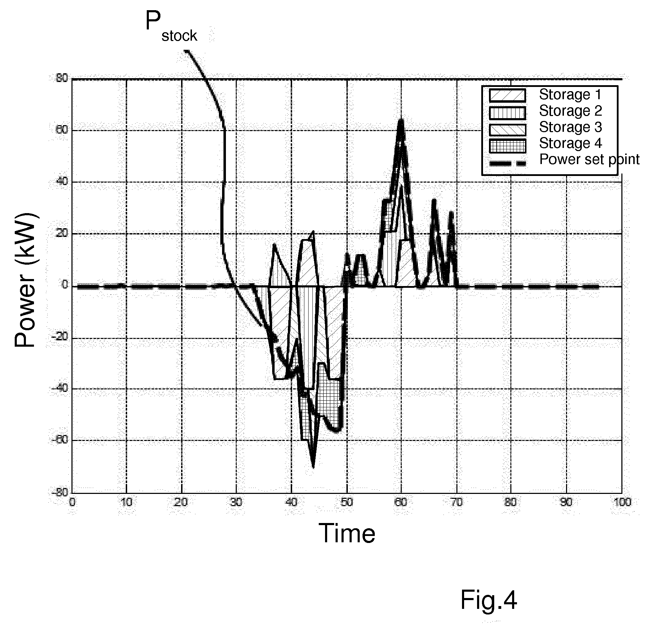

Sur la figure 4, on a représenté une courbe P_{stock} en pointillés correspondant à un plan global de puissance P_{stock} de l'ensemble des modules de stockage 3A-3D. Les valeurs négatives de puissance correspondent à des puissances de charge alors que les valeurs positives de puissance correspondent à des puissances de décharge. La courbe P_{stock} est obtenue en réalisant la différence entre la puissance de consigne P_{cons} du plan de production (figure 3) et l'estimation de la production photovoltaïque Pₑₛₜ (figure 2).

Lors de l'élaboration du plan de production, le dispositif gestionnaire 4 décompose le plan global de puissance des modules de stockage en contributions individuelles respectives des différents modules de stockage 3A-3D. Ces contributions sont représentées par des zones individuelles de charge ou décharge qui sont respectivement relatives aux différents modules de stockage, comme indiqué par la légende sur la figure 4. Les phases de charge et/ou de décharge d'un module de stockage peuvent être liées à un fonctionnement normal du module ou à une opération connexe. Le dispositif gestionnaire 4 spécifie ainsi un plan prédictif de fonctionnement pour chaque module de stockage 3A-3D pour une période future (correspondant à la période de référence). Un plan de fonctionnement comprend un plan de puissance contenant des données d'évolution de la puissance du module de stockage pendant la période de référence. Le plan de puissance permet d'élaborer un plan d'état de charge du module de stockage. En outre, le plan de fonctionnement inclut un plan d'état de fonctionnement contenant les différents états de fonctionnement du module durant la période de référence ces états pouvant être en charge, en décharge, inactif, en cours d'opération connexe. Le plan de fonctionnement inclut aussi la description de l'opération connexe sélectionnée par le dispositif gestionnaire 4 lors de la phase d'optimisation des fonctions objectifs.

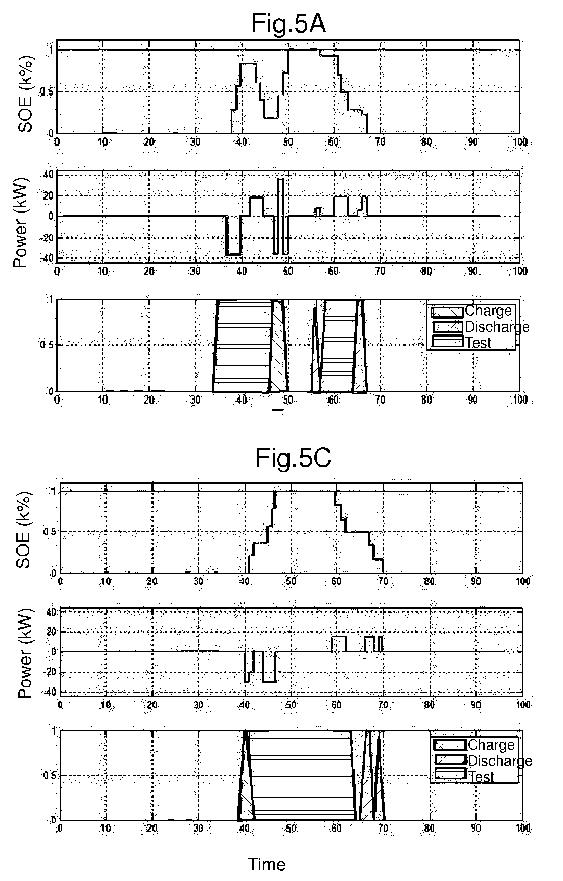

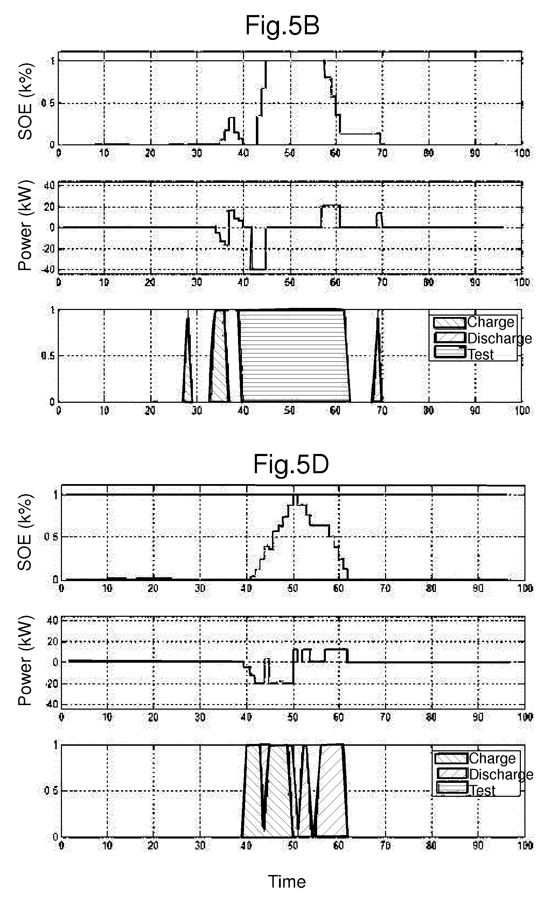

Sur chacune des figures 5A à 5D, on a représenté, pour chaque module de stockage 3A-3D :
- le plan de puissance (courbe « Power » en kW) qui comprend une courbe d'évolution temporelle de la puissance de consigne du module de stockage considéré pendant une période de référence ;
- un plan d'état de charge résultant de ce plan de puissance (courbe « SoE » en %) et
- un plan d'état de fonctionnement représentant les différents états de fonctionnement successifs du module durant la période de référence et incluant la description de l'opération connexe sélectionnée par le dispositif gestionnaire lors de la phase d'optimisation des fonctions objectifs.

Les opérations connexes planifiées sur les modules de stockage sont ensuite exécutées pendant le fonctionnement du système de production 1, en cours de production sur la base du plan de production établi.

Dans la description qui précède, l'intégration des opérations connexes sur les modules de stockage dans le plan de production est réalisée par le dispositif gestionnaire 4 lors de l'élaboration du plan de production. En variante, les opérations connexes sont intégrées dans le plan de production a posteriori, une fois le plan de production établi. Dans ce cas, pour intégrer une opération connexe dans le fonctionnement d'un module de stockage, le procédé comprend une étape de recherche de caractéristiques spécifiques de cette opération connexe dans les plans de puissance et d'état de charge du module de stockage considéré. Les caractéristiques spécifiques de l'opération connexe comprennent ici un état de charge initial du module de stockage, un profil de puissance (de charge et de décharge) et un critère d'arrêt de l'opération, comme précédemment explicité.

Le procédé peut prévoir d'intégrer une opération connexe sur un module de stockage en effectuant une compensation de charge ou de décharge avec au moins un autre module de stockage. Par exemple, on voit sur la figure 4 qu'entre les instants 37 et 40, le module de stockage 3B réalise une décharge afin de compenser une charge du module de stockage 3A qui correspond à une opération connexe.

Le procédé peut également prévoir de modifier le plan de production dans une marge de tolérance donnée afin de faciliter l'intégration d'une opération connexe dans le plan de production.

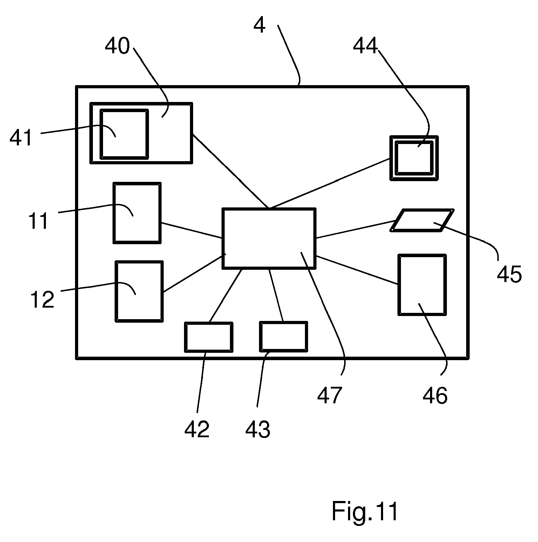

En référence à la figure 11, le dispositif gestionnaire 4 comprend les éléments suivants :
- un outil d'élaboration d'un plan de production 40 qui comporte un module 41 d'intégration d'opérations connexes sur des modules de stockage dans le plan de production,
- les bases de données 11 et 12,
- une interface 42 de liaison avec le dispositif 2 de production d'énergie,
- une interface 43 de liaison avec les modules de stockage 3A-3D et
- des moyens d'interface utilisateur comportant par exemple un écran d'affichage 44, un clavier de saisie 45 et une module logiciel 46 d'interface utilisateur gérant la saisie et l'affichage de données.

L'outil 40 comprend un logiciel d'optimisation tel que AIMMS®.

En outre le dispositif gestionnaire 4 comprend une unité centrale de commande 47 à laquelle tous les éléments 11, 12 40 à 46 sont connectés et destiné à contrôler le fonctionnement de ces éléments.

## Revendications

1. Procédé de gestion par un dispositif gestionnaire (4) de la production d'énergie d'un système énergétique intégrant un dispositif de production d'énergie (2) et une pluralité de modules de stockage d'énergie (3A-3D), comprenant une étape (E5) d'élaboration, par le dispositif gestionnaire (4), d'un plan prédictif de production d'énergie en sortie du système pour une période future, **caractérisé en ce qu'**il comprend une étape d'intégration (E5), par le dispositif gestionnaire (4), d'au moins une opération connexe sur un module de stockage dans le plan de production du système.

2. Procédé selon la revendication précédente, **caractérisé en ce que** l'intégration d'une opération connexe sur un module de stockage dans le plan de production comprend l'élaboration d'un plan prédictif de fonctionnement du module de stockage contenant une mise à un état de charge initial requis pour l'opération connexe, une phase d'exécution d'un profil de puissance de l'opération connexe et un arrêt de ladite phase d'exécution lorsqu'un critère d'arrêt de l'opération connexe est satisfait.

3. Procédé selon l'une des revendications précédentes, **caractérisé en ce qu'**il comprend une étape (E1) d'enregistrement d'au moins un profil d'opération connexe dans une base de données (12) du dispositif gestionnaire (4), ledit profil contenant un état de charge initial requis du module de stockage, un profil de puissance comprenant des données d'évolution temporelle de puissance du module de stockage, un critère d'arrêt de l'opération connexe.

4. Procédé selon l'une des revendications précédentes, **caractérisé en ce que** l'étape (E5) d'élaboration d'un plan de production et l'étape d'intégration d'au moins une opération connexe sur un module de stockage (3A-3D) dans le plan de production du système sont réalisées de façon combinée.

5. Procédé selon l'une des revendications 1 à 3, **caractérisé en ce que** l'étape (E5) d'intégration d'au moins une opération connexe sur un module de stockage (3A-3D) dans le plan de production du système est réalisée après l'étape (E5) d'élaboration d'un plan de production.

6. Procédé selon l'une des revendications précédentes, **caractérisé en ce que** l'étape (E5) d'élaboration d'un plan de production et l'étape d'intégration d'au moins une opération connexe sur un module de stockage dans le plan de production sont réalisées par le dispositif gestionnaire par exécution d'un logiciel d'optimisation.

7. Procédé selon la revendication précédente, **caractérisé en ce qu'**il comprend une étape (E4) de spécification de fonctions à optimiser, l'une au moins des fonctions étant d'intégrer au moins une opération connexe dans le fonctionnement d'au moins un module de stockage.

8. Procédé selon l'une des revendications précédentes, **caractérisé en ce que** l'intégration (E5) d'une opération connexe sur un module de stockage (3A-3D) est réalisée en effectuant une compensation de charge ou de décharge avec au moins un autre module de stockage.

9. Procédé selon l'une des revendications, **caractérisé en ce que** l'intégration (E5) d'une opération connexe sur un module de stockage est réalisée par modification d'un plan de production préétabli dans une marge de tolérance donnée.

10. Procédé selon l'une des revendications précédentes, **caractérisé en ce que** l'opération connexe est l'une des opérations du groupe comportant
- un premier test de capacité de charge, consistant à réaliser une charge complète à puissance de charge constante du module de stockage suivie d'une décharge complète à puissance de décharge constante du module de stockage,
- un deuxième test de capacité de charge, consistant à réaliser une charge complète à plusieurs puissances de charge du module de stockage suivie d'une décharge complète à plusieurs puissances de décharge du module de stockage,
- un équilibrage du module de stockage **caractérisé par** une charge à une puissance de charge fixe inférieure ou égale à une puissance maximale et pendant une durée supérieure ou égale à une durée minimale,
- une opération de maintenance **caractérisée par** une inactivité du module de stockage pendant une durée déterminée.

11. Procédé selon l'une des revendications précédentes, **caractérisé en ce que** le dispositif de production d'énergie (2) est de type intermittent et le plan de production est établi sur la base d'une estimation de production d'énergie par le dispositif de production d'énergie pendant la période future.

12. Dispositif gestionnaire d'un système de production d'énergie intégrant un dispositif de production d'énergie (2) et une pluralité de modules de stockage d'énergie (3A-3D), comprenant un outil (40) d'élaboration d'un plan prédictif de production d'énergie en sortie du système pour une période future, **caractérisé en ce que** l'outil (40) d'élaboration du plan de production comprend un module (41) d'intégration d'au moins une opération connexe sur un module de stockage dans le plan de production du système.

13. Dispositif selon la revendication 12, **caractérisé en ce que** le module d'intégration (41) est adapté pour élaborer un plan prédictif de fonctionnement du module de stockage contenant une mise à un état de charge initial requis pour l'opération connexe, une phase d'exécution d'un profil de puissance de l'opération connexe et un arrêt de ladite phase d'exécution lorsqu'un critère d'arrêt de l'opération connexe est satisfait.

14. Dispositif selon l'une des revendication 12 et 13, **caractérisé en ce qu'**il comprend une base de données (12) de stockage d'au moins un profil d'opération connexe, ledit profil contenant un état de charge initial requis du module de stockage, un profil de puissance comprenant des données d'évolution temporelle de puissance du module de stockage, un critère d'arrêt de l'opération connexe.
